# EUROPEAN PATENT APPLICATION

(11) **EP 1 394 027 A2**
(43) Date of publication of application: **03.03.2004**
(21) Application number: 03077699.1
(22) Date of filing: 29.08.2003
(51) Int. Cl.: B62J 1/08

(54) **Assembly of a saddle and a saddle pin for a bicycle**

(30) Priority: 30.08.2002 NL 1021366
(71) Applicant: Batavus B.V., 8444 AR Heerenveen (NL)
(72) Inventor: Naberman, André, 8281 MW Genemuiden (NL)
(74) Representative: Prins, Adrianus Willem

(57) **Abstract**

An assembly of a saddle (1) and a saddle pin (2) for a bicycle. The saddle (1) has a frame (6) with parallel section parts (9), which, in the position of use, extend in the riding direction. The saddle pin (2) comprises a tube (11) and a head assembly (12) at an, in use, superjacent end of the tube (11). The head assembly (12) has a support (13) projecting from the tube (11); at least two clamping jaws (14, 15) for receiving the substantially parallel section parts (9) of the saddle frame (6) and a quick tensioner with a handle (18) for tensioning the tensioning pin (16). The handle (18) is pivotable between a tensioning position, in which a first part (20) of the handle (18) extends below the saddle cover (3) beside the parallel section parts (9) and blends into a second part (22) of the handle (18) which extends before at least one of the parallel section parts (9), and a releasing position pivoted relative to the tensioning position.

## Description

The invention relates to a an assembly of a saddle and a saddle pin for a bicycle.

It is conventional to connect the saddle and the saddle pin of a bicycle with each other by clamping parallel section parts - in general rods with a round cross-section - between clamping jaws of a head of the saddle pin. To clamp the parallel section parts by means of the clamping jaws, a clamping bolt is used, which runs transversely to the parallel section parts below the saddle. When the clamping jaws are released, the position of the saddle can be adjusted in the riding direction by moving the parallel section parts in the clamping jaws. The saddle can further be tilted by tilting the clamping jaws about a horizontal axis transverse to the riding direction.

It is an object of the invention to provide a solution making it possible to clamp and release the clamping jaws quickly and without excessive effort, without the user of the bicycle being hindered during riding by operating elements.

According to the invention, this object is achieved by providing an assembly according to claim 1.

By operating the handle of the quick tensioner, it can be quickly ensured that the clamping jaws clamp and release the parallel section parts. Through the fact that in the tensioning position a first part of the handle extends below the saddle cover beside the parallel section parts and blends into a second part of the handle, which extends before at least one of the parallel section parts, the handle can have a great length - as a result of which the operation requires little effort - without projecting in the tensioning condition from the limited space below the saddle cover. In particular, through the proposed course of the handle, the narrow space below the front end part of the saddle before the parallel section parts of the saddle frame is also utilized to accommodate the handle in the tensioning position.

Special embodiments of the assembly according to the invention are laid down in the dependent claims.

The invention will be illustrated and explained below in more detail on the basis of an exemplary embodiment with reference to the drawing, in which:
Fig. 1 shows a side view of an example of an assembly of a saddle and a saddle pin according to the invention,
Fig. 2 shows a bottom view in a direction parallel to a tube of the saddle pin of the assembly according to Fig. 1, and
Fig. 3 shows a view in cross section on the line III-III in Fig. 1 of a part of the assembly according to Figs. 1 and 2.

The example, shown in the drawing, of an assembly according to the invention comprises a saddle 1 and a saddle pin 2. The saddle 1 has a saddle cover 3 with a rear end part 4 and a front end part 5 which is narrower than the rear end part 4. In the shown position of use, a frame 6 is located below the saddle cover 3, which frame is connected with the saddle cover 3, on its front side by means of a block 7 and on its rear side via spring/damper elements 8. The frame 6 has parallel section parts 9, which, in the shown position of use, extend in the riding direction 10.

According to this example, the saddle pin 2 consists of a tube 11, which can be placed in a seat tube of a bicycle frame so as to be telescopically slidable therein and can be clamped therein by means of a strap at the upper end of the seat tube of the bicycle frame, and a head assembly 12 at an, in use, superjacent end of the tube 11.

The head assembly 12 has a support 13 fastened to and projecting from the tube 11. On both sides of the support 13, clamping jaws 14, 15 are provided to receive the approximately parallel section parts 9 of the saddle frame 6.

To clamp the clamping jaws 14, 15 toward the support 13, a tensioning pin 16 is provided, one end of which is screwed into a nut 17. The other end of the tensioning pin 16 is connected with a quick tensioner 18 with a handle 19 for tensioning the tensioning pin 16.

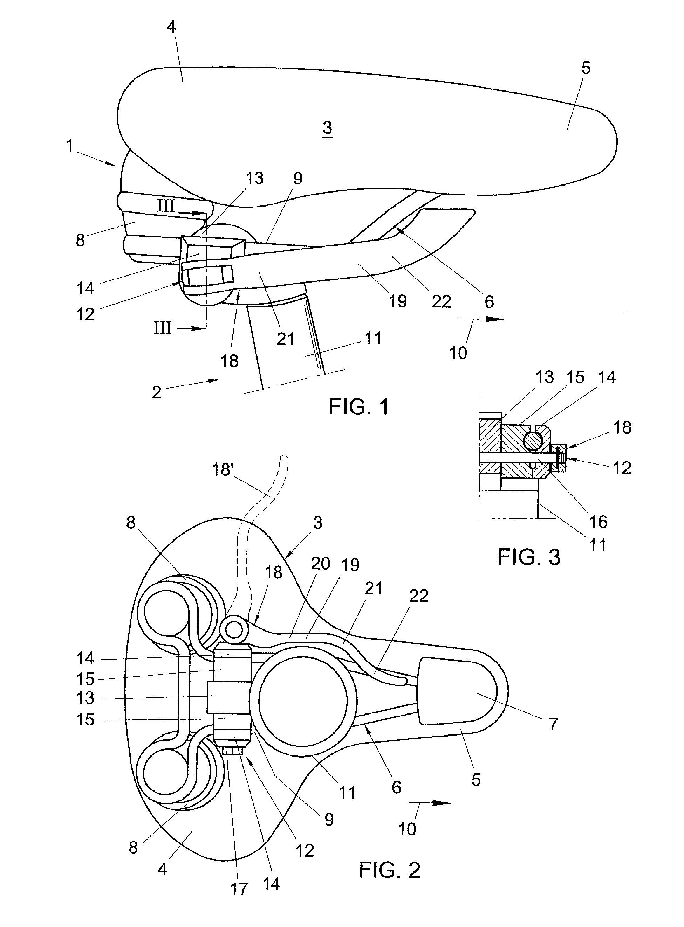

The handle 18 is pivotable between a tensioning position and a releasing position 18' pivoted away from the saddle, as shown in Fig. 2 in dot-dash lines. In the tensioning position, a first part 20 of the handle 18 extends below the saddle cover 3 beside the parallel section parts 9 and blends via a bend 21 into a second part 22 of the handle 18 which extends before one of the parallel section parts 9. The handle 18 has a great length, as a result of which the operation requires little effort, but nevertheless does not project in the tensioning position from the limited space below the saddle cover 3. In particular, through the proposed course of the handle 18, the narrow space below the front end part 5 of the saddle located before the parallel section parts 9 of the saddle frame 6 is also utilized to accommodate the handle 18 in the tensioning position.

When the clamping jaws are released, the position of the saddle cover 3 can be adjusted in the riding direction by moving the substantially parallel section parts 9 of the saddle frame 6 relative to the clamping jaws 14, 15. Furthermore, by rotating the clamping jaws 14, 15 relative to the support, the inclination of the saddle cover 3 can be adjusted.

The first part 21 of the handle 18 runs, seen in bottom view, from the tensioning pin 16 first convergingly to the section parts 9 of the saddle frame 6 and then more parallel to the section parts 9 of the saddle frame 6. As a result thereof, the tensioning pin 16, in the tensioning position, runs closely along the frame 6 of the saddle 2, as a result of which, in use, contact with the thighs of a user sitting on the saddle is prevented.

The second part 22 of the handle 18 shows an upwardly deflected course to very near the saddle cover 3. As a result thereof, the free end of the handle 18 is located very close below the saddle cover 3, which limits the risk of objects, such as clothing, being caught on the handle 18.

## Claims

1. An assembly of a saddle (1) and a saddle pin (2) for a bicycle, comprising:
a saddle (1) with a saddle cover (3) with a rear end part (4) and a front end part (5) which is narrower than the rear end part (4), and a frame (6) which, in the position of use, is located below the saddle cover (3) and has parallel section parts (9) which, in the position of use, extend in the riding direction;
a tube (11) for telescopically slidable and clampable placement in a seat tube (11) of a bicycle frame (6); and
a head assembly (12) at an, in use, superjacent end of the tube (11), comprising:
a support (13) projecting from the tube (11);
at least two clamping jaws (14, 15) for receiving the substantially parallel section parts (9) of the saddle frame (6) on both sides of the support (13);
a tensioning pin (16) for clamping the clamping jaws (14, 15) toward the support (13); and
a quick tensioner with a handle (18) for tensioning the tensioning pin (16);
which handle (18) is pivotable between a tensioning position, in which a first part (20) of the handle (18) extends below the saddle cover (3) beside the parallel section parts (9) and blends into a second part (22) of the handle (18) which extends before at least one of the parallel section parts (9), and a releasing position (18') pivoted away from the parallel section parts (9) relative to the tensioning position.

2. An assembly according to claim 1, wherein the first part (20) of the handle (18), seen in bottom view, runs from the tensioning pin (16) first convergingly to the section parts (9) of the saddle frame (6) and then more parallel to the section parts (9) of the saddle frame (6).

3. An assembly according to claim 1 or 2, wherein the second part (22) of the handle (18) shows an upwardly deflected course to very near the saddle cover (3).
